# EUROPÄISCHE PATENTSCHRIFT

(11) **EP 2 147 225 B1**
(45) Veröffentlichungstag und Bekanntmachung des Hinweises auf die Patenterteilung: **24.08.2011**
(21) Anmeldenummer: 08735726.5
(22) Anmeldetag: 03.04.2008
(51) Int. Cl.: F16D 25/0638

(54) **ANORDNUNG EINER TELLERFEDER BEI EINEM KOLBEN EINES SCHALTELEMENTES**
ARRANGEMENT OF A DISK SPRING AT A PISTON OF A SWITCHING ELEMENT
AGENCEMENT D'UNE RONDELLE BELLEVILLE DANS UN PISTON D'UN ÉLÉMENT DE COMMUTATION

(30) Priorität: 21.04.2007 DE 102007018969
(43) Veröffentlichungstag der Anmeldung: 27.01.2010
(73) Patentinhaber: ZF Friedrichshafen AG, 88038 Friedrichshafen (DE)
(72) Erfinder: OBERGASSER, Michael, 88045 Friedrichshafen (DE)
(86) Internationale Anmeldenummer: PCT/EP2008/053977
(87) Internationale Veröffentlichungsnummer: WO 2008/128866

(56) Entgegenhaltungen:
- EP-A- 1 298 355
- DE-A1- 10 124 213
- FR-A- 2 386 731
- US-A- 4 945 782

## Beschreibung

Die vorliegende Erfindung bezieht sich auf die Anordnung einer Tellerfeder bei einem Kolben eines Schaltelementes gemäß dem Oberbegriff des Patentanspruchs 1. Eine solche Anordnung ist z.B. aus DE 10124213 A bekannt.

Aus der DE-OS 2124008 ist eine Halterung für eine oder mehrere auf ein axial verschiebbar angeordnetes Bauteil einwirkende Federn, insbesondere für die auf einen von Druckmittel beaufschlagbaren Ringkolben einer Reibungskupplung oder Bremse einwirkenden Rückstellfedern bekannt. Hierbei ist zur Abstützung der Feder ein ein- oder mehrteiliges, im Querschnitt doppelwinkelförmig ausgebildetes Stützglied vorgesehen, das mit einem Schenkel in einer Ausnehmung einer Nut eines ortsfesten Bauteils eingesetzt ist und an dessen anderen Schenkel die Feder unmittelbar oder über Zwischenglieder anliegt.

Aus dem Stand der Technik ist auch bekannt, die Tellerfeder mit ihren innen liegenden Fingern direkt auf dem Kolben eines Schaltelementes anzuordnen. Hierbei entsteht der Nachteil, dass die Anordnung der Finger der Tellerfeder zu einem hohen Verschleiß des Kolbens führen kann.

Der vorliegenden Erfindung liegt daher die Aufgabe zugrunde, eine Anordnung einer Tellerfeder bei einem Kolben eines Schaltelementes anzugeben, durch die ein Verschleiß des Kolbens auf einfache Weise vermieden wird. Da bauartbedingt sehr wenig Bauraum zur Verfügung steht, soll die erfindungsgemäße Anordnung der Tellerfeder eine platzsparende Anordnung des Kolbens, des Kolbenfingers, der Tellerfeder und des Sprengrings gewährleisten.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Anordnung der Tellerfeder vorgeschlagen, bei der die Finger der Tellerfeder durch Kronen im Gehäuse ragen und an einer Blechhülse, die im Gehäuse des Schaltelementes gehalten wird, anliegen, wobei der Außendurchmesser der Tellerfeder, der als geschlossener Ring ausgeführt ist, am Kolben des Schaltelementes anliegt. Dadurch wird die Pressung und somit der Verschleiß des Kolbens reduziert. Die Vorspannung der Tellerfeder verhindert zudem ein Lösen der Blechhülse.

Im Rahmen der Erfindung ist die Blechhülse mittels eines Bajonett-Verschlusses bzw. einer Bajonett-Halterung im Gehäuse gehalten.

Des weiteren ist im Rahmen einer vorteilhaften Weiterbildung vorgesehen, dass die Kolbenfinger zur Betätigung des Schaltelementes zwischen den Fingern der Tellerfeder hindurchgreifen, was in vorteilhafter Weise zu einer äußerst kompakten Bauweise führt.

Die Erfindung wird im folgenden anhand der beigefügten Figuren beispielhaft näher erläutert. Es zeigen:

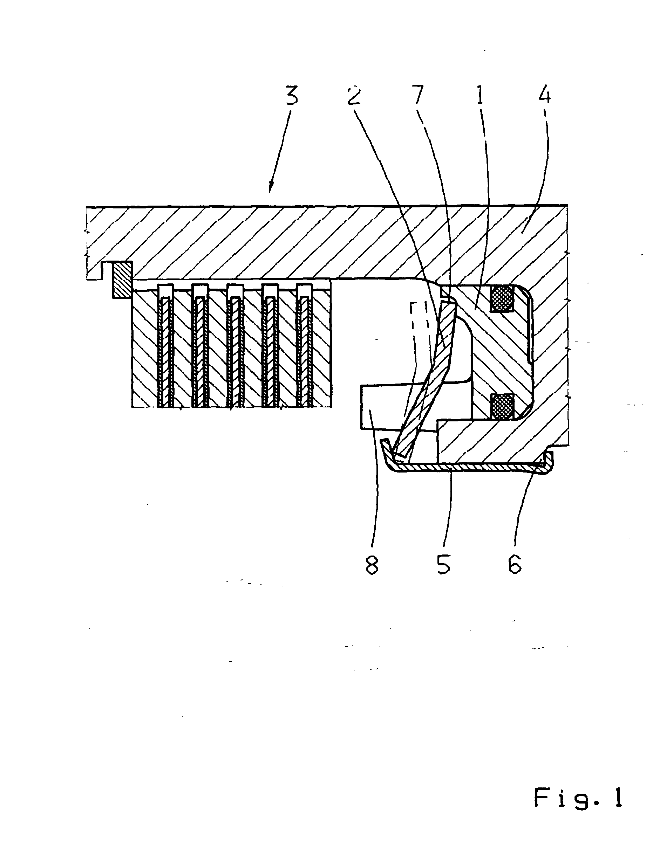

- Figur 1:: Eine schematische Schnittansicht zur Veranschaulichung der erfindungsgemäßen Anordnung der Tellerfeder; und
- Figur 2:: Eine perspektivische Ansicht einer Ausführungsform der Blechhülse, die zur Anordnung der Tellerfeder benötigt wird.

In der Figur ist der Kolben des Schaltelementes 3 mit 1 und die Tellerfeder mit 2 bezeichnet. Die Tellerfeder 2 ist derart angeordnet, dass die Finger der Tellerfeder 2 durch Kronen im Gehäuse 4 ragen und an einer Blechhülse 5, die im Gehäuse 4 des Schaltelementes 3 gehalten wird, anliegen.

Im Rahmen der Erfindung ist die Blechhülse 5 mittels eines Bajonett-Verschlusses bzw. einer Bajonett-Halterung 6 im Gehäuse 4 gehalten. Zu diesem Zweck weist das Gehäuse 4 Nuten auf; die Blechhülse 5 ist vorzugsweise als Bajonettring ausgebildet und weist mehrere Vorsprünge auf, welche in die gehäuseseitig vorgesehene Nuten einführbar und durch Drehen verriegelbar sind.

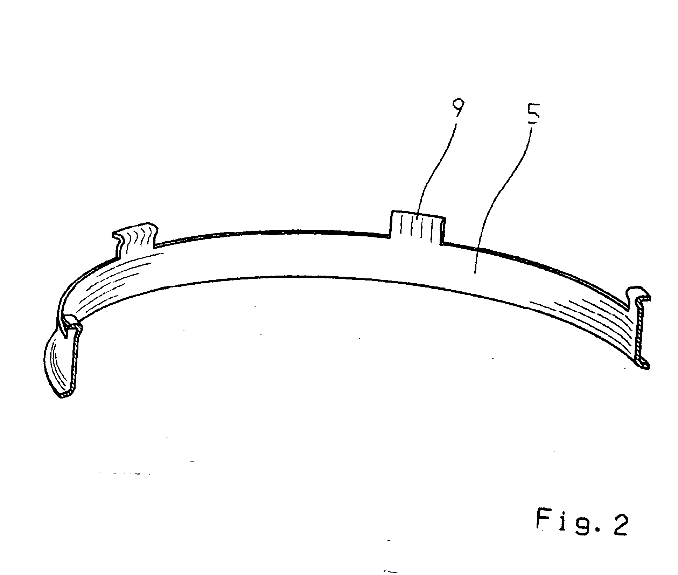

Eine mögliche Ausführung der Blechhülse 5 ist Gegenstand der Figur 2, die einen Teil der Hülse 5 zeigt, wobei die Vorsprünge mit dem Bezugszeichen 9 versehen sind.

Des weiteren liegt der Außendurchmesser 7 der Tellerfeder 2 am Kolben 1 des Schaltelementes an. Wie bereits erläutert, greifen die Kolbenfinger 8 zur Betätigung des Schaltelementes zwischen den Fingern der Tellerfeder 2 hindurch.

Durch die Erfindung wird eine Anordnung der Tellerfeder eines Schaltelementes zur Verfügung gestellt, welche wenig Bauraum beansprucht und in einem geringen Verschleiß für den Kolben resultiert.

### Bezugszeichen

- 1: Kolben
- 2: Tellerfeder
- 3: Schaltelement
- 4: Gehäuse
- 5: Blechhülse
- 6: Bejonett-Verschluss
- 7: Außendurchmesser der Tellerfeder
- 8: Kolbenfinger
- 9: Vorsprung

## Patentansprüche

1. Anordnung einer Tellerfeder (2) bei einem Kolben (1) eines Schaltelementes (3), wobei ein Außendurchmesser (7) der Tellerfeder (2), der als geschlossener Ring ausgeführt ist, am Kolben (1) des Schaltelementes (3) anliegt und die Finger der Tellerfeder (2) an einer Blechhülse (5), die im Gehäuse (4) des Schaltelementes (3) gehalten wird, anliegen, **dadurch gekennzeichnet, dass** die Finger der Tellerfeder (2) durch kronen im Gehäuse (4) ragen wobei die Blechhülse (5) mittels eines Bajonett-Verschlusses bzw. einer Bajonett-Halterung (6) im Gehäuse (4) gehalten wird, das Gehäuse (4) Nuten aufweist und die Blechhülse (5) als Bajonettring ausgebildet ist und mehrere Vorsprünge (9) aufweist, welche in die gehäuseseitig vorgesehene Nuten einführbar und durch Drehen verriegelbar sind.

2. Anordnung einer Tellerfeder bei einem Kolben eines Schaltelementes, nach Anspruch 1, **dadurch gekennzeichnet, dass** Kolbenfinger (8) zur Betätigung des Schaltelementes (3) zwischen den Fingern der Tellerfeder (2) hindurchgreifen.

## Claims

1. Arrangement of a plate spring (2) on a piston (1) of a shift element (3), wherein an outer diameter (7) of the plate spring (2), which is designed as a closed ring, bears against the piston (1) of the shift element (3) and the fingers of the plate spring (2) bear against a sheet-metal sleeve (5) which is held in the housing (4) of the shift element (3), **characterized in that** the fingers of the plate spring (2) project through crowns in the housing (4), wherein the sheet-metal sleeve (5) is held in the housing (4) by means of a bayonet connection or a bayonet retainer (6), the housing (4) has grooves, and the sheet-metal sleeve (5) is designed as a bayonet ring and has a plurality of projections (9) which can be inserted into grooves provided in the housing and which can be locked by means of a rotation.

2. Arrangement of a plate spring on a piston of a shift element, according to Claim 1, **characterized in that** piston fingers (8) for actuating the shift element (3) extend through between the fingers of the plate spring (2).

## Revendications

1. Agencement d'une rondelle Belleville (2) dans un piston (1) d'un élément de commutation (3), dans lequel un diamètre extérieur (7) de la rondelle Belleville (2), qui est réalisée sous forme de bague fermée, s'applique contre le piston (1) de l'élément de commutation (3), et les doigts de la rondelle Belleville (2) s'appliquent contre une douille en tôle (5) qui est maintenue dans le boîtier (4) de l'élément de commutation (3), **caractérisé en ce que** les doigts de la rondelle Belleville (2) font saillie à travers des couronnes dans le boîtier (4), la douille en tôle (5) étant maintenue dans le boîtier (4) au moyen d'une fermeture à baïonnette ou d'une fixation à baïonnette (6), le boîtier (4) présentant des rainures et la douille en tôle (5) étant réalisée sous forme de bague à baïonnette et présentant plusieurs saillies (9), qui peuvent être introduites dans les rainures prévues du côté du boîtier et qui peuvent être verrouillées par rotation.

2. Agencement d'une rondelle Belleville dans un piston d'un élément de commutation selon la revendication 1, **caractérisé en ce que** des doigts de piston (8) pour l'actionnement de l'élément de commutation (3) viennent en prise entre les doigts de la rondelle Belleville (2).
